**Europäisches Patentamt**

**European Patent Office**

**Office européen des brevets**

(19)

(11) Veröffentlichungsnummer: **0 405 512 A2**

## (12) · EUROPÄISCHE PATENTANMELDUNG

(21) Anmeldenummer: **90112273.9**

(22) Anmeldetag: **27.06.90**

(51) Int. Cl.5: **H04Q 1/457**

(30) Priorität: **28.06.89 AR 314281**

(43) Veröffentlichungstag der Anmeldung:
**02.01.91 Patentblatt 91/01**

(84) Benannte Vertragsstaaten:
**AT BE CH DE ES FR GB GR IT LI LU NL SE**

(71) Anmelder: **EQUITEL S.A.**
**Gral. Roca 1865**
**San Martin (Pcia.de Bs.Aires)(AR)**

(72) Erfinder: **Iglesias, Carlos Ramon Gouson 30**
**Campana,**
**Provincia Buenos Aires(AR)**
Erfinder: **Gennaro, Antonio**
**Virrey Cevallos 1107, 1. "B"**
**Buenos Aires(AR)**

(74) Vertreter: **Fuchs, Franz-Josef, Dr.-Ing.**
**Postfach 22 13 17**
**D-8000 München 22(DE)**

(54) **Signalerkennungseinrichtung zur Auswertung von Mehrfrequenz-Codezeichen-Signalen.** .

(57) Zur Auswertung von Wählsignalen wie auch von Signalen im Zusammenhang mit der Signalisierung zwischen digitalen Vermittlungsstellen soll eine Signalerkennungseinrichtung angegeben werden, die auf Signale verschiedener Zeichengabesysteme einstellbar ist und sich mit geringem Hardwareaufwand realisieren läßt.

Eine derartige Signalerkennungseinrichtung besteht aus einer Modulationsschaltung (M) zur Modulierung der Einzelfrequenzen dieser Signale (s(kt)) mit zwei um 90° phasenverschobenen harmonischen Schwingungen dieser Frequenzen, ferner einer Filterschaltung (F), die die durch die Modulation erhaltenen Signalpaare außerhalb festgelegter Frequenzbänder mit der Modulationsfrequenz als Mittenfrequenz stark bedämpft, sowie aus einer Pegelermittlungsschaltung (P), die durch Quadrierung und Addition der gefilterten Signalpaare dem Pegel der auszuwertenden Eingangssignale proportionale und der Differenz zwischen Eingangssignalfrequenz und der jeweiligen Mittenfrequenz umgekehrt proportionale Ausgangssignale bildet.

FIG 1

EP 0 405 512 A2

## SIGNALERKENNUNGSEINRICHTUNG ZUR AUSWERTUNG VON MEHRFREQUENZEN-CODEZEICHEN-SIGNALEN.

Die Erfindung betrifft eine Signalerkennungseinrichtung zur Auswertung von Mehrfrequenzen-Code-Zeichen-Signalen, insbesondere für den Einsatz in einer digitalen Fernsprechvermittlungsstelle.

Im Falle des erwähnten Einsatzes in einer digitalen Fernsprechvermittlungsstelle kommen als Mehrfrequenzen-Codezeichen-Signale, die eine solche Signalerkennungseinrichtung auszuwerten hat, die von Teilnehmern mit Mehrfrequenzen-Tastwahlfernsprechern ausgesendeten Wählsignale wie auch Signale in Frage, die zur Signalisierung zwischen Vermittlungsstellen ausgetauscht werden und beispielsweise dem Zeichengabesystem CCITT-R2 entsprechen.

Es besteht ein Interesse daran, daß solche Signalerkennungseinrichtungen ohne großen Aufwand auf die Auswertung von Zeichen verschiedener Zeichengabesysteme eingestellt werden können. Ferner sollten solche Einrichtungen bei ihrem Einsatz in Vermittlungsstellen, in denen Zeitmultiplexbetrieb herrscht, quasi gleichzeitig die Mehrfrequenzencodezeichen einer größeren Anzahl von Zeitkanälen auswerten können. Sie sollten nach einem Konzept arbeiten, das eine Hardwarerealisierung dieser Forderungen im rein digitalen Bereich gestattet, wobei der Hardwareaufbau möglichst wenig aufwendig sein soll.

Die Aufgabe der Erfindung besteht also darin, eine Signalerkennungseinrichtung der eingangs genannten Art anzugeben, die den genannten Forderungen gerecht wird.

Diese Aufgabe wird durch eine Signalerkennungsrinrichtung der eingangs genannten Art gelöst, die durch folgende Merkmale gekennzeichnet ist:

a) Sie enthält eine Modulationsschaltung, durch die die auszuwertenden Signale nach den als Codeelement derselben möglichen Frequenzen getrennt jeweils mit zwei um 90° phasenverschobenen harmonischen Schwingungen dieser Frequenzen moduliert werden,

b) sie enthält ferner eine Filterschaltung, der die modulierten Signalpaare zugeführt werden und die Signalbestandteile, die außerhalb festgelegter Frequenzbänder mit jeweils einer der Modulationsfrequenzen als Mittenfrequenz liegen, stark bedämpft,

c) sie enthält schließlich eine Pegelermittlungsschaltung, der die durch die Filterschaltung abgegebenen Signalpaare zugeführt werden und die daraus durch Quadrierung und Addition der Signalwerte Ausgangssignale bildet, die proportional dem Pegel des auszuwertenden Eingangssignals und umgekehrt proportional der Differenz zwischen der Eingangssignalfrequenz und der jeweiligen Mittenfrequenz sind.

Die erfindungsgemäße Einrichtung läßt sich durch entsprechende Veränderung der Frequenz der Modulierungssignale in einfacher Weise auf die Parameter unterschiedlicher Signalisierungssysteme einstellen. Bei Realisierung in Digitaltechnik läßt sie sich unter Ausnutzung jeweils derselben Bestandteile für die Erkennung von Signalen sämtlicher Zeitkanäle eines in Fernmeldevermittlungsstellen üblichen Zeitmultiplexsystems mit beispielsweise 30 Zeitkanälen ausnutzen.

Weitere in den Unteransprüchen angegebene Ausgestaltungen der Erfindung betreffen eine solche Realisierung in Digital-Technik.

Nachstehend wird die Erfindung anhand von Ausführungsbeispielen unter Bezugnahme auf eine Zeichnung näher erläutert.

In der Zeichnung zeigen:

Figur 1 eine schematische Darstellung einer digitalen Vermittlungsstelle, als deren Bestandteil die erfindungsgemäße Signalerkennungseinrichtungseinrichtung eingesetzt sein kann.

Figur 2 ein Prinzipschaltbild der erfindungsgemäßen Signalerkennungseinrichtung.

Figur 3 ein Blockschaltbild für ein Realisierungsbeispiel des Modulatorteils der erfindungsgemäßen Schaltungsanordnung.

Figur 4 ein Blockschaltbild einer Realisierung des Filterteils der erfindungsgemäßen Signaleinrichtung.

Figur 5 ein Blockschaltbild einer Realisierung des Pegelermittlungsteils der erfindungsgemäßen Signalerkennungseinrichtung.

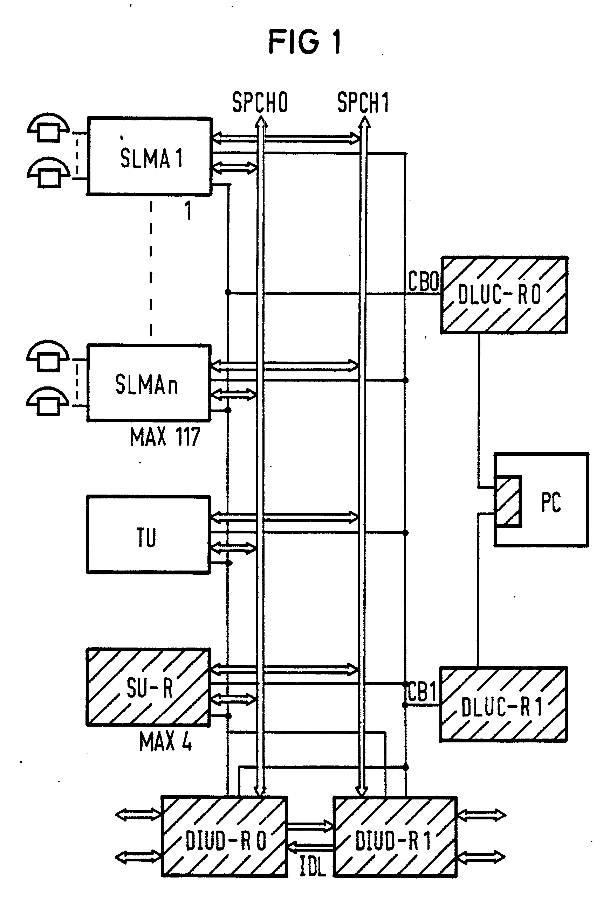

Die Figur 1 zeigt die Struktur einer digitalen Fernsprechvermittlungsstelle, die vorzugsweise für kleine bis mittlere ländliche oder vorstädtische Einzugsbereiche konzipiert ist.

Wesentliche Bestandteile einer solchen Vermittlungsstelle sind Teilnehmeranschlußbaugruppen SLMA1 bis SLMAn, an die jeweils eine Anzahl von analogen Teilnehmerendgeräten angeschlossen ist und die im wesentlichen teilnehmerindividuelle Teilnehmeranschlußschaltungen enthalten, denen u.a. die Aufgaben der Erkennung des Schleifenzustandes, der Teilnehmerspeisung, der Zweidraht-/Vierdraht-Umsetzung, der Analog-Digital bzw. Digital-Analogwandlung, Filterung und Leitungsanpassung sowie der Schnittstellenrealisierung zur Vermittlungsseite hin zukommen.

Diese Teilnehmeranschlußbaugruppen SLMA haben Zugriff zu zwei internen Sprachmultiplexleitungen SPCH0 und SPCH1, sowie zu zwei Signalmultiplexleitungen CB0 und CB1.

Die Sprachmultiplexleitung SPCH0 und SPCH1 münden in digitale Schnittstellenschaltungen DIUD-R0 und DIUD-R1, die eine Schnittstelle zu PCM-Übertragungsleitungen PCM1 und PCM2 enthalten, welche Verbindungen mit anderen Vermittlungsstellen herstellen, bei denen es sich um Durchgangsvermittlungsstellen handelt. Die Einheiten DIUD-R0 und DIUD-R1 enthalten außerdem jeweils ein Koppelfeld zur Verbindung von auf den internen Sprachmultiplexleitungen SPCH0 und SPCH1 gebildeten Zeitkanälen mit Zeitkanälen, die auf den erwähnten PCM-Leitungen gebildet sind.

Die vorerwähnten Signalmultiplexleitungen CB0 und CB1 münden ebenfalls in die Schnittstelleneinheiten DIUD-R0 und DIUD-R1 sowie außerdem in gedoppelte Steuerbaueinheiten DLUC-R0 und DLUC-R1. Diese Steuerbaueinheiten sind jeweils mit einer PC-Einheit verbunden, die der Durchführung von Bedienungs-und Wartungsfunktionen (O & M-Funktionen) dient.

An weiterer neben den Teilnehmeranschlußbaueinheiten SLMA vorhandenen peripheren Baueinheiten sind eine Testbaueinheit TU zu erwähnen, sowie eine Signalisierungseinheit SU-R, die ebenfalls Zugriff zu den erwähnten Multiplexleitungen SPCH0, SPCH1 sowie CB0 und CB1 haben. Bestandteil der letztgenannten Baneinheit SU-R ist nun die erfindungsgemäße Signalerkennungseinrichtung, auf die nachstehend näher eingegangen wird.

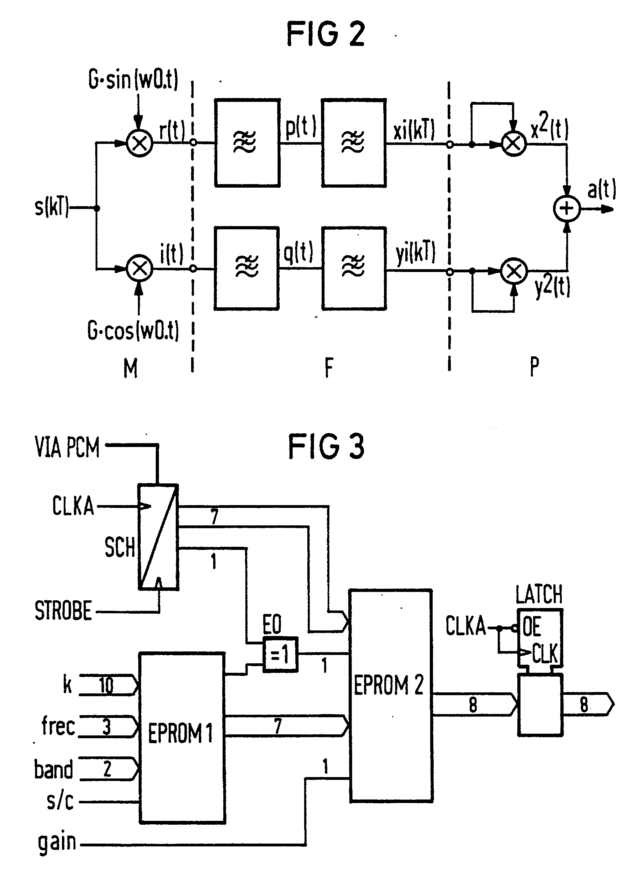

Wie in der Figur 2 schematisch angedeutet, besteht die erfindungsgemäße Signalerkennungseinheit aus drei Funktions- und Baueinheiten, nämlich einem Modulator M, einer Filterschaltung F und einer Pegelermittlungsschaltung P.

Im Modulator M werden zu bewertende Eingangssignale S (t) mit Paaren von um 90° phasenverschobener harmonischer Schwingungen moduliert, nämlich nämlich mit einer Sinusschwingung $G \cdot \sin(2 \bar{x} f \cdot kT)$ und mit einer Sinusschwingung $G.\cos(2 \bar{x} .f. kT)$ mit jeweils den Frequenzen, die als Codeelement im Mehrfrequenzencodezeichen S(kT) vorkommen.

Es entstehen damit entsprechend n solcher zur Codierung verwendeter Frequenzen n Paare von modulierten Signalen, für die nachfolgender Zusammenhang besteht:

$$R_1(kt) = G \cdot S(kt) \cdot \sin(2 \bar{x} \cdot f_1 \cdot kT)$$
$$I_1(kt) = G \cdot S(kt) \cdot \cos(2 \bar{x} \cdot f_1 \cdot kT)$$

$$\cdot$$
$$\cdot$$
$$\cdot$$

$$R_n(kt) = G \cdot S(kt) \cdot \sin(2 \bar{x} \cdot f_n \cdot kT)$$
$$I_n(kt) = G \cdot S(kt) \cdot \cos(2 \bar{x} \cdot f_n \cdot kT)$$

Hierbei bedeuten f1 bis fn die Modulationsfrequenzen bzw. die im Mehrfrequenzencodezeichen verwendeten Frequenzen und T die Periode, mit der die Mehrfrequenzencodesignale abgetastet werden.

Die genannten Signalpaare werden der Filterschaltung F als Eingangssignale zugeführt. Diese Filterschaltung ist zweistufig ausgebildet, arbeitet als Rekursivfilter und hat eine derartige Filtercharakteristik, daß Bestandteile der zugeführten Signale, die außerhalb festgelegter Frequenzbänder mit jeweils einer der Modulationsfrequenzen fl bis (fn als Mittenfrequenz liegen, stark bedämpft werden.

Die von der ersten Stufe der Filterschaltung abgegebenen Signale gehorchen folgendem Zusammenhang:

$P_i(kt) = P_i(kT-T) + K_2 \cdot K_1 \cdot [R_i(kT) - P_i(kT)-T)]$

$Q_i(kt) = Q_i(kt-T) + K_2 \cdot K_1 \cdot [I_i(kt) - Q_i(kt)-T)]$

Die von der Filterschaltung abgegebenen Ausgangssignale gehorchen nachfolgendem Zusammenhang.

$X_i(kT) = X_i(kt-T) + K_2 \cdot K_1 \cdot [P_i(kT) - X_i(kT - T)]$

$Y_i(kT) = Y_i(kT-T) + K_2 \cdot K_1 \cdot [Q_i(kT) - Y_i(kT - T)]$ wobei K1 und K2 Filterkonstanten sind und i = 1,2... n ist.

Im Zuge der Behandlung durch die Filterschaltung erfahren die Eingangssignale, die als nichtlinear codierte Signale ankommen, eine Linearisierung.

Die von der Filterschaltung gelieferten Signalpaare Xi(kT) und Yi(kT), werden als Eingangssignale der Pegelermittlungsschaltung P zugeführt, die diese Signalwertequadriert und addiert.

Das dementsprechende Ausgangssignal gehorcht demnach dem Zusammenhang

$m_i(kT) = 10 \log\{[X_i(kT)]^2 + [Y_i(kT)]^2\} + N$

wobei i = 1,2,...n und N eine Einstellkonstante ist. Dieser Zusammenhang läßt sich näherungsweise auch

folgendermaßen darstellen.

$$mi \approx 20 \log Mi - 20 \log \left[ 1 - \frac{(f - fi)^2}{\Delta F^2} \cdot \left[ 10^{3/20} - 1 \right] \right]$$

wobei $\Delta F$ die Bandbreite von Bändern mit den Mittenfrequenzen f1 bis fn bedeutet, außerhalb deren die Dämpfung größer als 3dB ist. Aus der obengenannten Formel man ersieht man, daß der Pegel des Ausgangssignals proportional dem Pegel des auszuwertenden Eingangssignals und umgekehrt proportional der Differenz zwischen der Eingangssignalfrequenz und der jeweiligen Mittenfrequenz sind.

Die Figur 3 zeigt ein Ausführungsbeispiel für den Modulator gemäß Figur 2 in rein digitaler Schaltkreistechnik. Es ist hierbei, wie oben dargelegt, vorausgesetzt, daß die auszuwertenden Signale in Form von Abtastproben geliefert werden, die als digitale Codesignale dargestellt sind. Diese Signale kommen auf einer Multiplexleitung, die einer der Leitungen SPCH0 oder SPCH1 in Figur 1 entspricht, in serieller Form an und gelangen an ein als Serien-Parallel-Wandler arbeitendes Schieberegister SCH, das einen ersten Teil dieses Modulators darstellt.

Ein weiterer Teil des Modulators ist ein digitaler Signalerzeuger zur Erzeugung der vorerwähnten Paare um 90° phasenverschobener harmonischer Schwingungen, der in Form eines Lesespeichers EPROM1 ausgebildet ist. In diesem Lesespeicher sind in Paaren von Zuordnungstabellen, die den zu erzeugenden unterschiedlichen Modulationsfrequenzen entsprechen, Codesignale gespeichert, die Abtastwerten jeweils einer Cosinusschwingung und einer Sinusschwingung der betreffenden Frequenz darstellen und die im Takt der Abtastfrequenzen wechselweise sowie paarweise nacheinander ausgelesen werden.

Ein dritter Bestandteil des Modulators ist ein Produktgenerator, der in Form eines zweiten Lesespeichers EPROM2 ausgebildet ist. Diesem Lesespeicher werden als erster Ansteueradressenteil die aus dem Schieberegister SCH in Parallelform ausgelesenen Eingangssignalworte jeweils ohne das Vorzeichenbit als erster Adressenteil zugeführt. Als zweiter Adressenteil für den Lesespeicher EPROM2 dient das Ausgangssignal einer Exclusiv-Oder-Schaltung EO, durch die das Vorzeichenbit der aus dem Schieberegister SCH ausgelesenen PCM-Worte und das Vorzeichenbit der PCM-Worte verknüpft werden, die aus dem ersten Lesespeicher EPROM1 ausgelesen werden. Der dritte Adressenteil für den Lesespeicher EPROM2 sind die außer dem Vorzeichenbit übrigen Bits der aus dem ersten Lesespeicher EPROM1 ausgelesenen PCM-Worte.

In dem den Produktgenerator bildenden zweiten Lesespeicher EPROM2 sind unter den in der beschriebenen Weise zusammengesetzten Adressen digitale Codesignale gespeichert, die den Produkten, der durch die Adressenteile repräsentierten Abtastwerte darstellen, für die folgender Zusammenhang gilt:

$r(k) = [1 + \text{"gain"} \cdot G] \cdot s(k) \cdot mr(k)$

$i(k) = [1 + \text{"gain"} \cdot G] \cdot s(k) \cdot mi(k)$

Dabei bedeutet "gain" ein Ein-Bitsignal, das vom Prozessor der Baugruppe SU-R (siehe Figur 1) geliefert wird und darüber entscheidet, ob auf die Produkte des Modulators ein Verstärkungsfaktor angewendet werden soll oder nicht. $s(k)$ bedeutet das auszuwertende Eingangssignal $mr(k)$ und $mi(k)$ bedeuten die Modulationssignale.

Die vom Produktgenerator gelieferten Signale $r(k)$ und $i(k)$ werden nach Verzögerung um eine Abtastperiode durch eine Verriegelungsschaltung LATCH an die nachgeordnete Filterschaltung (siehe Figur 2) weitergegeben.

In der Praxis ist der Modulator gemäß Figur 3 für die Verarbeitung von Eingangssignalen aus 16 Eingangskanälen und der Identifizierbarkeit von acht Code - bzw. Modulationsfrequenzen ausgelegt.

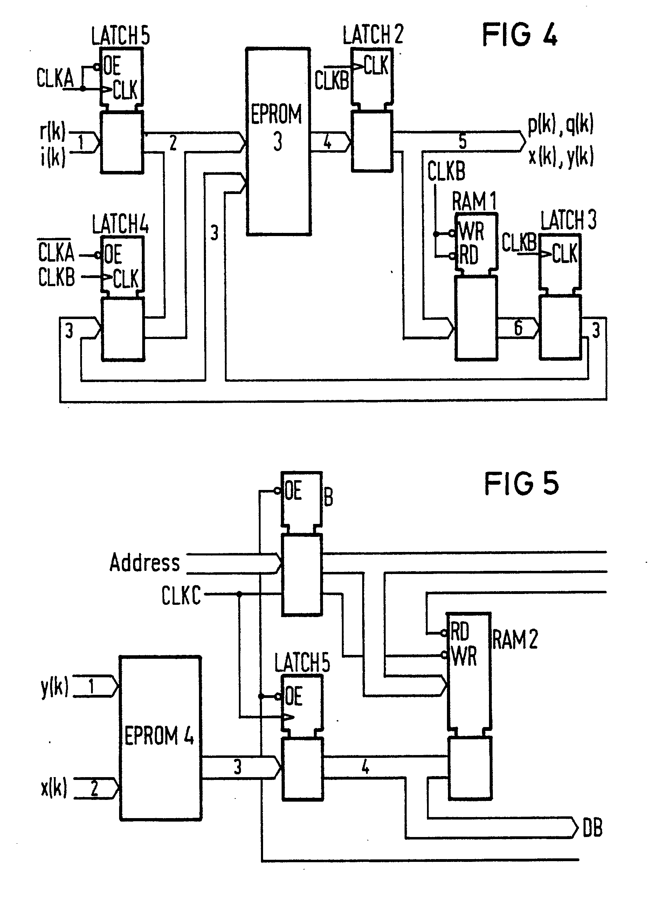

Fie Figur 4 zeigt ein Ausführungsbeispiel der vorerwähnten Filterschaltung. Diese besteht im wesentlichen aus einem Lesespeicher EPROM3, in dem digitale Codesignale gespeichert sind, die gemäß dem Filteralgorythmus geänderte, vom Modulator abgegebene Abtastwerte darstellen. Weiterer wesentlicher Bestandteil der Filterschaltung ist ein Schreib-Lese-Speicher RAM1, der der Aufnahme der aus dem Lesespeicher ausgelesenen Signale dient, wobei diese über eine Verriegelungsschaltung LATCH2, die eine Zeitanpassung gestattet, zugeführt werden. Vom Ausgang der erwähnten Verriegelungsschaltung LATCH2 aus erfolgt auch die Weitergabe der Ausgangssignale der Filterschaltung. Die aus dem Schreib-Lese-Speicher RAM1 ausgelesenen digitalen Codesignale gelangen über eine weitere Verriegelungsschaltung LATCH3, die eine Zeitverzögerung von einer Abtastperiode bewirkt, als Teiladresse an den Lesespeicher EPROM3. Ein anderer Teil der von der Verriegelungsschaltung LATCH3 abgegebenen Signale gelangt über eine weitere zur Zeitanpassung dienende Verriegelungsschaltung LATCH4 an weitere Adresseneingänge des Lesespeichers EPROM3, um zusammen mit den ebenfalls über eine Verriegelungsschaltung LATCH5 zugeführte Eingangssignale r(k) und i(k) der Filterschaltung die weitere Teiladresse für den Lesespeicher EPROM3 zu bilden. Für die Ausgangssignale p(k) und q(k) dieser ersten Filterstufe gilt dabei der Zusammenhang:

$$p(k) = p(k - 1) + W [\sqrt{2} \cdot r(k) - p(k - 1)]$$

$$q(k) = q(k - 1) + W [\sqrt{2} \cdot i(k) - q(k - 1)]$$ wobei W eine Filterkonstante bedeutet und mit k Signalabtastwerten zu den Abtastzeitpunkten k bzw. zu dem um eine Abtastperiode früher gelegenen Abtastzeitpunkten k - 1 bedeuten.

Für die am Ausgang einer zweiten, ähnlich aufgebauten Filterstufe, der die Signale p (k) und q (k) als Eingngssignale zugeführt wserden, gilt dann der Zusammenhang:

$$x(k) = x(k - 1) + W [(\sqrt{2} \cdot p(k) - x(k - 1)]$$

$$y(k) = y(k - 1) + W [(\sqrt{2} \cdot q(k) - y(k - 1)]$$

In der Praxis können wegen Besonderheiten, die sich aus dem bei der Digitalisierung der verarbeiteten codierten Signale verwendeten Codierungsgesetzes ergeben, noch Modifikationen dieses Schaltungsprinzips erforderlich sein, auf die hier jedoch nicht eingegangen wird.

Anhand der Figur 5 wird nun noch ein Ausführungsbeispiel der Pegelermittlungsschaltung (entsprechend P in Figur 2) der erfindungsgemäßen Signalerkennungseinrichtung näher erläutert.

Diese Pegelermittlungsschaltung wird im wesentlichen aus einem Lesespeicher EPROM4 gebildet, der von dem durch die Filterschaltung abgegebenen Signalpaaren x(k und y(k) als Leseadresse angesteuert wird und in dem dem Logarithmus der Summe der quadrierten Produkte der diese Signalpaare repräsentierten Signale entsprechende codierte Signale gespeichert sind.

Ein weiterer wesentlicher Bestandteil dieser Pegelermittlungsschaltung ist ein Schreib-Lesespeicher RAM2, in den die aus dem Lesespeicher ausgelesenen codierten Signale zyklisch eingeschrieben und aus dem sie zur Ergebnisbewertung durch einen Prozessor auf einen Datenbus DB ausgelesen werden. Weitere Bestandteile der Pegelermittlungsschaltung gemäß Figur 5 sind eine Verriegelungsschaltung LATCH5, die der Zeitanpassung bei der Übergabe der aus dem Lespeicher EPROM4 ausgelesenen Signale an den Schreib-Lese-Speicher RAM2 dient, sowie eine Pufferschaltung B, über die die Ansteueradressen für den Schreib-Lesespeicher RAM2 geliefert werden.

## Ansprüche

1. Signalerkennungseinrichtung zur Auswertung von Mehrfrequenzen-Codezeichensignale, insbesondere für den Einsatz in einer digitalen Fernsprechvermittlungsstelle,
**gekennzeichnet**
durch folgende Merkmale:

a) Sie enthält eine Modulationsschaltung (M), durch die die auszuwertenden Signale (s(kt)) nach den als Codeelementen derselben möglichen Frequenzen getrennt jeweils mit zwei um 90° phasenverschobenen harmonischen Schwingungen (G . sinwot), G . cos(wot)) dieser Frequenzen moduliert werden,

b) sie enthält ferner eine Filterschaltung (F) der die modulierten Signalpaare (r(t), i(t)) zugeführt werden und die Signalbestandteile, die außerhalb festgelegter Frequenzbänder mit jeweils einer der Modulationsfrequenzen als Mittenfrequenz liegen, stark bedämpft,

c) sie enthält schließlich eine Pegelermittlungsschaltung (P), der die durch die Filterschaltung abgegebenen Signalpaare (xi(kT), yi(kT)) zugeführt werden und die daraus durch Quadrierung und Addition der Signalpaare Ausgangssignale (a(t)) bildet, die proportional dem Pegel des auszuwertenden Eingangssignals (s(kt)) und umgekehrt proportional der Differenz zwischen der Eingangssignalfrequenz und der jeweiligen Mittenfrequenz sind.

2. Einrichtung nach Anspruch 1,
**gekennzeichnet**
durch folgende Merkmale:
Unter der Voraussetzung eines Auftretens der auszuwertenden Signale in der Form von Abtastproben darstellender digitaler Codesignale besteht die Modulationsschaltung (M) aus:

a) Einer Einrichtung zur Abtastprobenerfassung, die durch ein als Serien-Parallel-Wandler arbeitendes Schieberegister (SCH) gebildet wird,

b) einem digitalen Signalerzeuger zur Erzeugung der Paare um 90° phasenverschobener harmonischer Schwingungen, der als Lesespeicher (EPROM1) ausgebildet ist, in dem in Paaren von Zuordnungstabellen einer Mehrzahl von Abtastungen solcher Schwingungen entsprechende digitale Codesignale gespeichert sind, und die im Takt der Abtastfrequenz wechselweise ausgelesen werden,

c) aus einem Produktgenerator, der ebenfalls als Lesespeicher (EPROM2) ausgebildet ist, der von dem die Abtastproben der auszuwertenden Signale darstellenden digitalen Codesignalen als dem einen Leseadressenteil und dem vom Signalerzeuger gemäß b) gelieferten Abtastproben der harmonischen Schwingungen darstellenden digitalen Codesignalen als dem anderen Leseadressenteil angesteuert wird und in dem unter diesen Adressen den Produkten der durch die Codesignale repräsentierten Abtastwerten entsprechende digitale Codesignale gespeichert sind.

3. Einrichtung nach Anspruch 2,
**dadurch gekennzeichnet;**
daß die Filterschaltung (F) enthält.

a) Einen Lesespeicher (EPROM3), in dem digitale Codesignale gespeichert sind, die gemäß dem Filteralgorithmus geänderte vom Modulator abgegebene Abtastwerte darstellen, sowie aus

b) einen Schreib-Lesespeicher (RAM1) zur Aufnahme der aus dem Lesespeicher (EPROM3) ausgelesenen digitalen Codesignale, die auch als Filterausgangssignale (x (k), y (k)) weitergegeben werden, sowie zur um eine Abtastperiodendauer verzögerten Ausgabe derselben als eine Leseteiladresse für den Lesespeicher gemäß a) (EPROM3), als dessen andere Leseteiladresse die vom Modulator abgegebenen digitalen Codesignale (r(k), i(k)) dienen.

4. Signalerkennungseinrichtung nach Anspruch 2 oder 3,
**dadurch gekennzeichnet,**
daß die Pegelermittlungsschaltung enthält:

a) Einen Lesespeicher (EPROM4), der von den durch die Filterschaltung abgegebenen Signalpaaren (y-(k),x(k)) als Lese adresse angesteuert wird, und in dem dem Logarithmus der Summe der quadrierten Produkte der dieses Signalpaare repräsentierende Signale entsprechende codierte Signale gespeichert sind, sowie

b) einen Schreib-Lesespeicher (RAM2), in dem die aus dem Lesespeicher ausgelesenen codierten Signale zyklisch eingeschrieben und aus dem sie zur Ergebnisbewertung durch Prozessor ausgelesen werden.

# FIG 1

# FIG 2

# FIG 3

# FIG 4

# FIG 5